# EUROPÄISCHE PATENTSCHRIFT

(11) **EP 1 688 718 B1**
(45) Veröffentlichungstag und Bekanntmachung des Hinweises auf die Patenterteilung: **04.08.2010**
(21) Anmeldenummer: 06000677.2
(22) Anmeldetag: 13.01.2006
(51) Int. Cl.: G01G 13/02, B65G 53/08, B65G 53/12

(54) **Verfahren und Vorrichtung zum Dosieren und zur pneumatischen Förderung von schwerfliessendem Schüttgut**
Method and device for dosing and pneumatic conveyance of low flowability bulk material
Procédé et dispositif pour le dosage et pour le transport pneumatique de matières en vrac s'écoulant difficilement

(30) Priorität: 26.01.2005 DE 102005003620
(43) Veröffentlichungstag der Anmeldung: 09.08.2006
(73) Patentinhaber: LANXESS Deutschland GmbH, 51369 Leverkusen (DE)
(72) Erfinder: Krebs, Claus, 47803 Krefeld (DE)

(56) Entgegenhaltungen:
- EP-A- 1 327 867
- BE-A- 559 070
- DE-U1- 20 100 783
- US-A- 2 448 745
- US-A- 2 831 587

## Beschreibung

Die Erfindung betrifft ein Verfahren und eine Vorrichtung für die pneumatische Förderung von schwerfließendem Schüttgut.

Ein eingangs genanntes Verfahren und eine dazugehörige Vorrichtung sind aus EP 0 692 411 A1 bekannt. Diese bekannte Technik verwendet ein Verfahren zur pneumatischen Förderung von Schüttgut, wobei dieses in einer Rohrleitung von einem Aufgabeort mittels einer Gasströmung zu einem Empfangsort transportiert wird, wobei das Schüttgut im Dichtstrom mit definierter Geschwindigkeit durch Erzeugen eines Pfropfens in der Rohrleitung diese teilbefüllt und nach Verschließen der Eintrittsöffnung der Rohrleitung mittels eines Einlaufverschlussventils diese durch Überdruck ganz oder teilentleert und wobei durch ein dauerndes Wiederholen dieses Vorganges ein quasikontinuierlicher Massenstrom vom Aufgabeort zum Empfangsort hergestellt werden kann. In der EP 0 692 441 B1 wird das so genannte Pumpflow-Verfahren offenbart, welches durch Anordnung eines Teilvakuumerzeugers die Rohrleitung im Saug-Dichtstrombetrieb teilbefüllt und durch Umschalten im Druckbetrieb entleert, und somit auf Zellenradschleusen bzw. Druckbehälter verzichtet werden kann. Mit zwei Ansaugleitungen nebeneinander in double action mode lassen sich quasikontinuierlich Container und Bigbags entleeren.

Nachteilig hierbei ist, dass bei stumpfen, schwerfließenden Gütern das Vakuum nicht ausreichend ist, um die Ansaugleitungen zu befüllen. Hierdurch werden die Verschlussorgane und der Förderprozess gestört.

Alternativ werden nach dem Stand der Technik bisher Hochdruckzellenradschleusen und Einzel/Doppeldruckgefäße eingesetzt beziehungsweise mit einander kombiniert gemäß DE 199 60 221 C2.

Die seit Jahrzehnten eingesetzten Schneckenpumpen sind mit einer hohen KW-Antriebsleistung versehen, um den Schüttgutpfropfen vor der Verschlussklappe zwischen Schneckenwelle und Förderleitung zu fördern, die vom Förderdruck zugehalten wird. Schneckenpumpen werden hauptsächlich für Mineralstoffe eingesetzt.

Die DD 267850 A1 zeigt, dass auch Förderschnecken ohne Verschlussklappe zum Einschleusen von Schüttgut benutzt werden können, wenn oberhalb des Schneckeneinlaufes ein Einschleusebehälter installiert wird. Die Schnecke dient nicht zur Überwindung einer Einschleusdruckdifferenz, die leckluftbehaftet wäre, sondern hat die Aufgabe, die Beladung µ, das heißt, das Verhältnis von Schüttgut zu Förderluft zu regeln beziehungsweise konstant zu halten.

US 2 831 587 A offenbart eine Schraubenpumpe zur kontinuierlichen Förderung von schwerfließendem Schüttgut zu einer Zone mit einem höheren Druck als dem, unter der sich das Schüttgut vor der Förderung befindet (Mehrstufen-Kompressionsverfahren). Hierbei werden mindestens zwei Schraubenpumpen mit einem dazwischen liegenden Zwischenbehälter gasdicht hintereinander geschaltet, wobei eine Kompression des Schüttgutes innerhalb der einzelnen Schraubenpumpe durch konisches Zulaufen des Schraubengehäuses und der Schraube erzielt wird. Zum anderen wird der Gasdruck in diesem Mehrstufen-Kompressionsverfahren vor jeder Schraubenpumpe erhöht.

In DE 40 14 912 A1 wird eine Technik beschrieben, bei der mit Hilfe eines schraubenförmig vorgefertigten teilflexiblen Elementes bei entsprechender Drehrichtung förderunterstützend die Förderrohrwand von Wandansatz freigehalten werden soll. Auch hier wird zum eigentlichen Füllen der Rohrleitung die bekannte, übliche Druckbehältertechnologie vorgeschlagen.

Der Erfindung liegt deshalb die Aufgabe zugrunde, ein Verfahren und eine Vorrichtung bereitzustellen, um eine vorbestimmte Menge an schwerfließendem Schüttgut zu dosieren, vollständig zu entleeren und zu einem Ziel zu fördern.

Diese Aufgabe wurde gelöst durch ein Verfahren zur pneumatischen Förderung von schwerfließendem Schüttgut unter Verwendung der erfindungsgemäßen Vorrichtung, in dem Schüttgut über eine Zuteilvorrichtung (8) in einen Längsförderer (1) dosiert wird, das Schüttgut anschließend über eine Förderleitung (19) entleert wird, wobei die Dosierung der Längsförderer (1) mittels Zuteilvorrichtung (8) des Schüttguts im Längsförderer (1) gewährleistet wird und die Entleerung des Längsförderers (1) bei gleichzeitiger Einwirkung eines mechanischen Förderers (9) und zufließendem Druckgas (17) erfolgt, wobei der mechanische Förderer (9) im Wesentlichen wandgängig im Längsförderer (1)angebracht ist, so dass der Längsförderer (1) beim Entleervorgang vollständig entleert wird, wobei die Steuereinrichtung (36) eingesetzt wird, um die Dosierung des Schüttgutes und die Entleerung des Längsförderers (1) zu steuern..

Die Verteilung vom schwerfließenden Schüttgut im Längsförderer (1) ist vorzugsweise gleichmäßig.

Das Druckgas (17) wird mit einem Druck zugefügt, der eine pneumatische Förderung erlaubt. Dieser Druck ist generell > 1 bar, kann aber von System zur System variieren. Das Druckgas (17) kann vorzugsweise aus Druckluft, Stickstoff, Sauerstoff, anderen Edelgasen oder Mischungen davon bestehen.

"Schwerfließendes Schüttgut" im Sinne der Anmeldung beschreibt Schüttgut, das Brücken bildet beziehungsweise Schüttgut, das nicht ohne Anregung oder mechanische Unterstützung ausläuft. Beispiele von schwerfließendem Schüttgut sind Pigmente und Feststoffe, die einen Kennwert D(v, 0,9) von maximal 40 µm aufweisen. Der D(v, 0,9)-Kennwert ist dem Fachmann bekannt, und gibt allgemein in Volumenteilchengrößenverteilungen den Partikeldurchmesser an, wo 90 % der Partikel einer Volumenteilchengrößenverteilung einen kleineren Partikeldurchmesser als D(v, 0,9) haben, und 10 % der Partikel einen größeren Partikeldurchmesser als D(v, 0,9) aufweisen.

"Vollständig entleert" im Sinne der Anmeldung bedeutet, dass ≥ 97 % des im Längsförderer (1) dosierten schwerfließenden Schüttguts durch das Verfahren entleert wird. Bevorzugt wird der Längsförderer (1) ≥ 98 % entleert.

"Wandgängig" im Sinne der Anmeldung bedeutet, dass der mechanische Förderer (9) mit engem Spiel zur Wand ausgeführt ist, und zwar so dicht, wie es die Fertigungstoleranzen von Schnecke und Gehäuse erlauben.

Mit der gegebenen Lehre ergibt sich damit der Vorteil, dass schwerfließendes Schüttgut störungsfrei und dosiergenau in die pneumatische Förderleitung (19) eingebracht und zu einem Bestimmungsort gefördert werden kann.

Der mechanische Längsförderer (1) bewirkt sowohl die Einspeisung des schwerfließenden Schüttguts in die Förderleitung (19) als auch die vollständige Ausförderung nach Druckbeaufschlagung. Wesentlich ist, dass der mechanische Förderer (9) so gestaltet ist, dass er die pneumatische Förderung unterstützt, so dass sich das schwerfließende Schüttgut nicht am Boden absetzen kann und der Längsförderer (1) vollständig entleert wird.

Die bei dem Verfahren wird eingesetzte Steuereinrichtung (36) dient zur Steuerung der Dosierung des Schüttgutes und der vollständigen Entleerung des Längsförderers (1).

Hierbei steuert und kontrolliert die Steuereinrichtung (36) den Ablauf der Dosierung über die Zuteilvorrichtung (8) in den Längsförderer (1), die Schaltung der Absperrarmaturen (4), (31), (32) und der Druckgasventile (30) sowie das Ein- und Ausschalten des Schneckengetriebemotors (7).

Die Dosierung und Entleerung des Längsförderers (1) wird vorzugsweise mehrfach wiederholt, wobei während der Dosierung des Längsförderers (1) Druckgas (17) durch eine zusätzliche Bypassleitung (12) in die Förderleitung (19) geleitet wird, um eine Strömung in der Förderleitung (19) von 15 bis 50 m/s aufrechtzuerhalten.

Das Schüttgut wird vorzugsweise so durch die Förderleitung (19) bewegt, dass die dosierte Menge an Schüttgut vollständig an den Empfangsort gelangt, ohne sich abzusetzen.

"Absetzen" im Sinne der Anmeldung bedeutet, dass das Schüttgut sich am Boden des Längsförderers (1) beziehungsweise am Boden der Förderleitung (19) ablagert und von der Gasströmung, die durch das Druckgas (17) gespeist wird, nicht mehr gefördert wird.

Die Erfindung betrifft auch eine Vorrichtung zur pneumatischen Förderung von schwerfließendem Schüttgut, enthaltend eine Zuteilvorrichtung (8), einen Längsförderer (1) mit einem mechanischem Förderer (9), der im Wesentlichen überall wandgängig im Längsförderer (1) angebracht ist, einem Getriebemotor (7) für den mechanischen Förderer (9), Druckgaseinlass- (11) und Auslassleitungen (10) jeweils am anderen Endbereich des Längsförderers (1), eine Förderleitung (19) für das Schüttgut bzw. Druckgas (17) und eine Steuereinrichtung (36), dadurch gekennzeichnet, dass die Dosierung einer vorbestimmten Menge von schwerfließendem Schüttgut in den Längsförderer (1) und die vollständige Entleerung des Längsförderers (1) durch die Steuereinrichtung (36) gesteuert werden kann..

Bevorzugt ist eine Vorrichtung, die ein oder mehrere Durchlässe (13) für Druckgas (17) aufweist.

Als mechanische Förderer (9) werden vorzugsweise eine Bandschnecke, Paddelschnecke, Vollblattschnecke oder eine Doppelschnecke, insbesondere eine Doppelpaddelschnecke oder Doppelbandschnecke verwendet.

Vorzugsweise wird bei der Verwendung einer der oben genannten Schnecken eine korkenzieherähnliche Strömung erzeugt, die in Verbindung mit der mechanischen Förderwirkung der Schnecke eine vollständige Entleerung des Langförderers (1) bewirkt. Die Zugabe von Druckgas (17) erfolgt an der Druckgaseinlassleitung (11) und gegebenenfalls an den Durchlassen (13) über die gesamte Länge des Langförderers (1) und an der Druckgasauslassleitung (10) nach den entsprechend dem Stand der Technik verfügbaren Einspeisevorrichtungen. In einer entsprechenden Vorrichtung mit einer Bandschnecke zeigte sich, dass schwer fließendes Schüttgut mit einer großen inneren Reibung dosiergenau in die Förderleitung (19) eingebracht und mit Unterstützung der mechanischen Förderwirkung ausgetrieben werden konnte.

Der Durchlass (13) für das Druckgas (17) wird vorzugsweise an der Unterseite des Längsförderers (1) angebracht. Unterseite bedeutet dabei auf dem unteren Halbkreis des Längsförderers (1).

Vorzugsweise wird eine Bypassleitung (12) mit einem Ringspalt oder einem T-Stück hinter dem Druckgasauslassleitung (10) auf die Förderleitung (19) angebracht.

Hinter der Druckgasauslassleitung (10) wird zur Förderleitung (19) hin vorzugsweise ein Quetschventil oder ein Kugelhahn angebracht.

Als Zuteilvorrichtung (8) wird vorzugsweise ein Schwingboden, eine Förderschnecke, ein positionsgesteuerter Schieber oder eine Zellenradschleuse eingesetzt.

Oberhalb der Zuteilvorrichtung (8) wird vorzugsweise eine peristaltische Walkeinrichtung (18) angeordnet. Damit wird der Austrag aus Aufgabebehältern (2) wie Big Bags gefördert. Für den Austrag aus Aufgabebehältern (2) wie Silos und Containern wird vorzugsweise eine Fluidisiereinrichtung mit Luftdüsen oder ein Schwingboden verwendet. Durch die Fluidisierwirkung und die gleichzeitig stattfindende Förderung der Schnecke ist es möglich, das Schüttgut störungsfrei ohne Bildung einer Verstopfung und vollständig in das übrige Teilstück der Förderleitung (19) einzubringen.

Die Dosierung in den Längsförderer (1) wird vorzugsweise durch eine oder mehrere Wiegeeinrichtungen (38) registriert. Dabei lässt sich über eine Steuereinrichtung (36) überwachen, dass genau die gewünschte und angeforderte Menge Schüttgut in den Längsförderer (1) eingebracht wird. Alternativ kann die Gewichtsbestimmung auch durch Differenzmessung an einem vorgelagerten Aufgabebehälter (2) erfolgen.

Eine besondere Ausbildung der erfindungsgemäßen Vorrichtung sieht nun vor, dass eine Vielzahl von Aufgabebehältern (2) in den Längsförderer (1) in gegenseitigem Abstand einmünden. Eine solche Ausführungsform ist insbesondere vorteilhaft, wenn mehrere Komponenten entsprechend einem Rezept, einer Mischung oder eines Ansatzes pneumatisch über eine längere Entfernung dosiert werden sollen. Zu diesem Zweck können an der Unterseite der Aufgabebehälter (2) in gegenseitigem Abstand zueinander eine Vielzahl von Zuteilvorrichtungen (8) angeordnet werden, die in die Steuereinrichtung (36) integriert sind, um die Dosierung des schwerfließenden Schüttgutes zu kontrollieren.

Vorzugsweise werden mehrere der beschriebenen Vorrichtungen aufgebaut und parallel geschaltet. Vorzugsweise werden eine oder mehrere Vorrichtungen durch eine oder mehrere Zuteilvorrichtungen (8) dosiert.

Ein Vorteil des erfindungsgemäßen Verfahrens und der dazu gehörenden Vorrichtung ist, dass nun beliebige Teilschüttgutmengen mit dem erfindungsgemäßen neuen Längsförderer (1) gebildet werden können. Aufgrund der notwendigen Lagerungen einer Förderschnecke als mechanischer Förderer (9) ist es demgemäß vorgesehen, dass bei größeren Schüttgutpfropfenlängen derartige Längsförderer (1) mit Zwischenlager verwendet werden oder auch mehrere Längsförderer (1) hintereinander liegend angeordnet werden, um so eine größere Menge Schüttgut zu fördern.

So ist es mit der Erfindung ohne weiteres möglich, Längen von Längsförderern (1) im Bereich von 5 bis 20 Meter und mehr zu erzeugen, um so gesteuert diese Mengen Schüttgut in einen Zielbehälter (20) über eine pneumatische Förderung zu bringen.

Die Erfindung wird deshalb nicht nur durch die Anordnung eines Längsförderers (1) in einem Teilstück der Förderleitung (19) bewirkt, sondern darüber hinaus noch durch eine Druckgaseinlassleitung (11) und gegebenenfalls am Umfang des Gehäuses des Längsförderers (1) angeordnete Durchlässe (13) für das Druckgas (17), die eine Belüftung des schwerfließenden Schüttguts im Längsförderer (1) bewirken, um das schwerfließende Schüttgut förderbar zu machen.

Durch zwei parallel geschaltete Längsförderer (1) erhält man ein Verfahren mit einer quasikontinuierlichen pneumatischen Förderung, welches sonst nur mit Hochdruckzellenradschleusen oder Doppeldruckgefäßen erreichbar ist, vermeidet aber Leckluft- bzw. Bauhöhenprobleme. Der mechanische Aufwand mit Schneckenwelle und Antriebsmotor als mechanischer Förderer (9) ist weit geringer als bei den vorgenannten Verfahren. Die Belüftung des Längsförderers (1) während der Dosierung ist nicht erforderlich und die Dosierung erfolgt rein mechanisch, während die Entleerung des Längsförderers (1) pneumatisch/mechanisch unterstützt wird.

Legt man in einer Silobatterie die erfindungsgemäßen Vorrichtung in einen Kanal kleiner 50 cm Tiefe oder auf Erdgeschosslevel, spart man eine ganze Geschosshöhe, sei es Etage oder Keller, insbesondere die häufigen Praxisprobleme mit dem Grundwasserspiegel bei Schüttgutcontainerentladeanlagen entfallen. Auch der Anschluss an die Schwerkraftschüttgutwagen der Bahn unter den Gleisen mit vernünftigen Entladeleistungen kann jetzt besser realisiert werden als bisher.

Im Folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Verfahrensschema zum Transport von schwerfließendem Schüttgut aus einem Big Bag als Aufgabebehälter (2) in einen Zielbehälter (20);
- Figur 2:: den Längsförderer (1) nach Figur 1 mit Zugabe des Druckgases (17) über die Bypassleitung (12) in Achsrichtung;
- Figur 3:: den Längsförderer (1) nach Figur 1 mit Zugabe des Druckgases (17) über die Bypassleitung (12) nach oben;
- Figur 4:: eine gegenüber Figur 1 verdoppelte Anordnung mit einer quasikontinuierlichen pneumatischen Förderung;
- Figur 5:: eine Vervielfachung der Anordnung nach Figur 1: Förderung von Schüttgut- Mischungen und Ansätzen aus mehreren unterschiedlichen Aufgabebehältern (2).

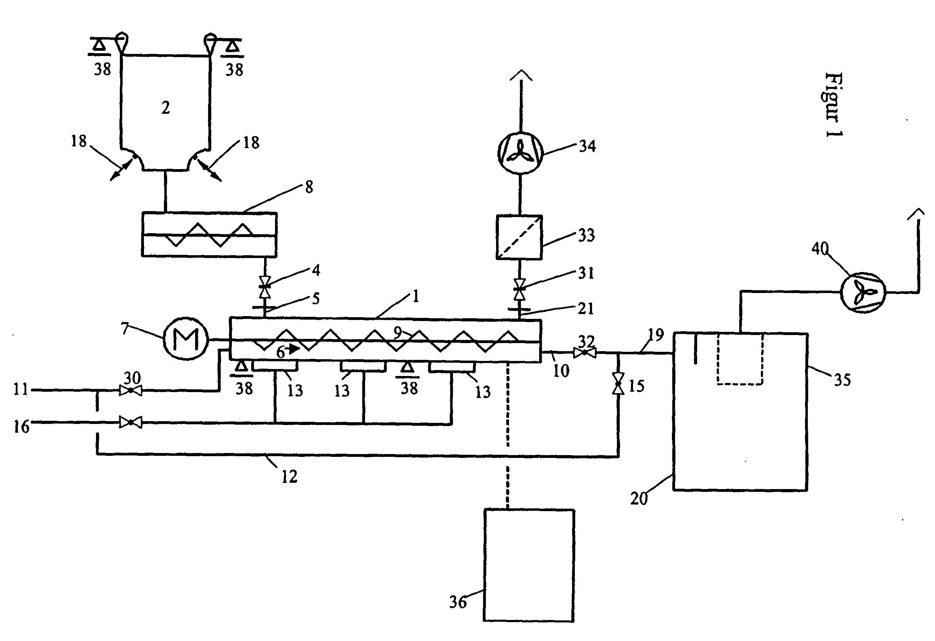

In Figur 1 ist allgemein eine Vorrichtung gemäß Erfindung dargestellt, in der das zu transportierende Schwerfließende Schüttgut in einem Big Bag als Aufgabebehälter (2) lagert. Eine vordefinierte Menge soll mittels der pneumatischen Fördereinrichtung in einen Zielbehälter (20) mit Empfangsfilter (35) und Absauggebläse (40) gefördert werden. Der Big Bag als Aufgabebehälter (2) kann mittels bekannter am Markt erhältlicher Walkeinrichtungen automatisch entleert werden. Das schwerfließende Schüttgut wird demgemäß über die geöffnete Absperrklappe (4) und einen zugeordneten Anschlussstutzen (5) in Pfeilrichtung (6) in den Längsförderer (1) eingetragen, wobei der Längsförderer (1) das schwerfließende Schüttgut über die Länge des Fördergehäuses des Längsförderer (1) verteilt. Das vom schwerfließenden Schüttgut verdrängte Druckgas (17) wird über einen Entlüftungsfilter (33) geleitet. Die Füllung des Längsförderers (1) kann in der einfachsten Weise über eine Zeit gesteuert werden (volumetrische Dosierung). Für genaue Dosierzwecke wird die Dosierung des Längsförderers (1) gewichtsgesteuert. Hierzu sind verschiedene Varianten möglich.

Das Gewicht des Big Bags als Aufgabebehälter (2) wird an der Aufhängung gemessen. Nach dem Ablassen einer bestimmten Menge Schüttgut wird der Einfördervorgang in den Längsförderer (1) gestoppt. In einer anderen Version wird das Gewicht des Längsförderers (1) bestimmt, der hierzu mit Kompensatoren ausgerüstet ist. Entsprechend der Gewichtszunahme am Längsförderer (1) wird die Dosierung der Längsförderer (1) abgestellt.

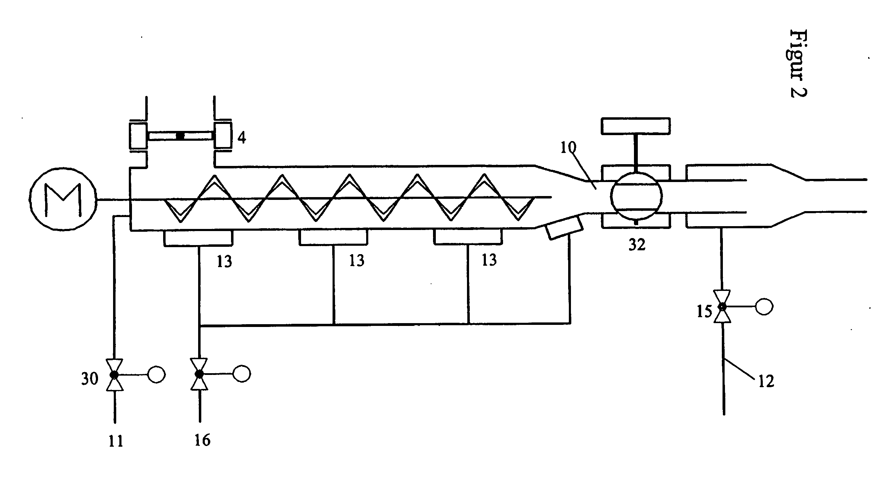

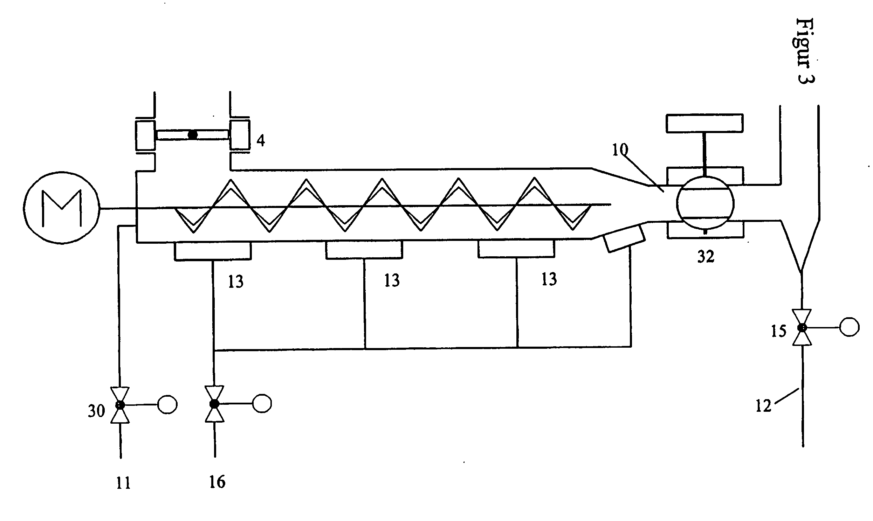

In einer weiteren Variante kann der Big Bag als Aufgabebehälter (2) periodisch abschnittweise in ein Dosiergerät als Zuteilvorrichtung (8) entleert werden. Über das Dosiergerät als Zuteilvorrichtung (8) wird die geforderte Menge Schüttgut in den Längsförderer (1) eingebracht. Nach der Dosierung des Längsförderers (1) wird die Absperrklappe (4) und die Entlüftungsklappe (31) geschlossen. Über die Druckgaseinlassleitung (11) wird dem geschlossenen Längsförderer (1) Druckgas (17) zugeführt. Sobald der Druck im Längsförderer (1) oberhalb des Druckes der Förderleitung (19) liegt, wird das Auslassverschlussorgan (32) zur Förderleitung (19) geöffnet. Gleichzeitig mit dem Öffnen des Auslassverschlussorgans (32) wird der Längsförderer (1) wieder angestellt und die Druckgasmengen werden auf einen vorbestimmten Wert erhöht. Durch die Fluidisierungseinrichtung als Durchlass (13) wird die innere Reibung des schwerfließenden Schüttgutes herabgesetzt und die Ausförderung unterstützt. Das schwerfließende Schüttgut wird über das an der Druckgaseinlassleitung (11) des Längsförderers (1) aufgegebene Druckgas (17) mit Unterstützung des Längsförderers (1) und unter Einwirkung, das heißt Drehung des mechanischen Förderers (9), ausgefördert. Der Längsförderer (1) bewirkt dabei eine vollständige Entleerung des schwerfließenden Schüttguts. Nach der Entleerung werden das Auslassverschlussorgan (32) und die Druckgasventile (30) der Druckgaseinlassleitung (11) wieder geschlossen. Damit die in die Förderleitung (19) eingeschleuste, schwerfließende Schüttgutmenge zum Ziel gefördert wird, muss dann über eine Bypassleitung (12) Druckgas (17) als Fördermittel aufgegeben werden. Der Längsförderer (1) wird über die Entlüftungsleitung und über den Entlüftungsstutzen (21) und über das Entlüftungsfilter (33) entspannt. Dies wird durch das Entlüftungsgebläse (34) unterstützt. Anschließend kann ein neuer Fördertakt entsprechend obiger Beschreibung eingeleitet werden. Bezüglich der Aufgabe des Druckgases (17) für die pneumatische Förderung gibt es neben der geschilderten Möglichkeit der Einspeisung an der Aufgabeseite die Möglichkeit der Einspeisung über einen Ringspalt nach Figur 2 oder ein T-Stück nach Figur 3 an der Auslassseite.

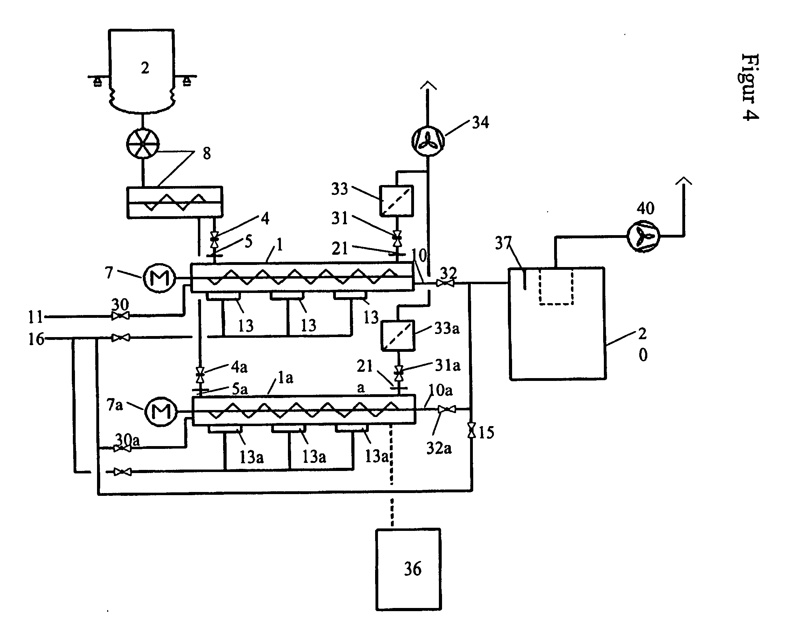

Im Ausführungsbeispiel nach Figur 4 ist eine quasikontinuierliche Förderung mit zwei abwechselnd zueinander betriebenen Längsförderern (1) und (1a) vorgesehen. Alle Teile der einen Vorrichtung sind mit einfache Bezugszeichen, während die gleichen Teile des anderen Verfahrenszweiges mit ein Buchstaben (zum Beispiel a, b, c oder d) bezeichnet sind.

Die Figur 4 zeigt, dass der eine Längsförderer (1) für die pneumatische Förderung dosiert wird, während der andere Längsförderer (1a) das eingebrachte schwerfließende Schüttgut entleert und umgekehrt. In diesem Beispiel wurde eine pneumatische Förderung aus einem Silo als Aufgabebehälter (2) und Zellenrad als Zuteilvorrichtung (8) heraus gewählt.

Die jeweils doppelt angeordneten Teile sind deshalb immer nur abwechselnd in Betrieb. Somit wird ein quasikontinuierlicher Massenstrom in der Förderleitung (19) erreicht, weil die beiden Teilstrecken der Förderleitungen (19a) ineinander münden und so die Förderleitung (19) abwechselnd auffüllen.

Die oben beschriebene Doppelanlage mit wechselseitigem Betrieb wird bevorzugt über eine Steuerung (36) betrieben.

Anstelle der Dosierung der Längsförderer (1) über einen Big Bag als Aufgabebehälter (2) kann der Längsförderer (1) auch dosiert werden aus:
- einem Silo
- einem Container
- einem Eisenbahnkesselwagen
- oder einem Silofahrzeug.

Hierbei stehen die beschriebenen Methoden der Zuteilung und Kontrolle der einzudosierenden Menge in den Längsförderer (1) in analoger Weise zur Verfügung.

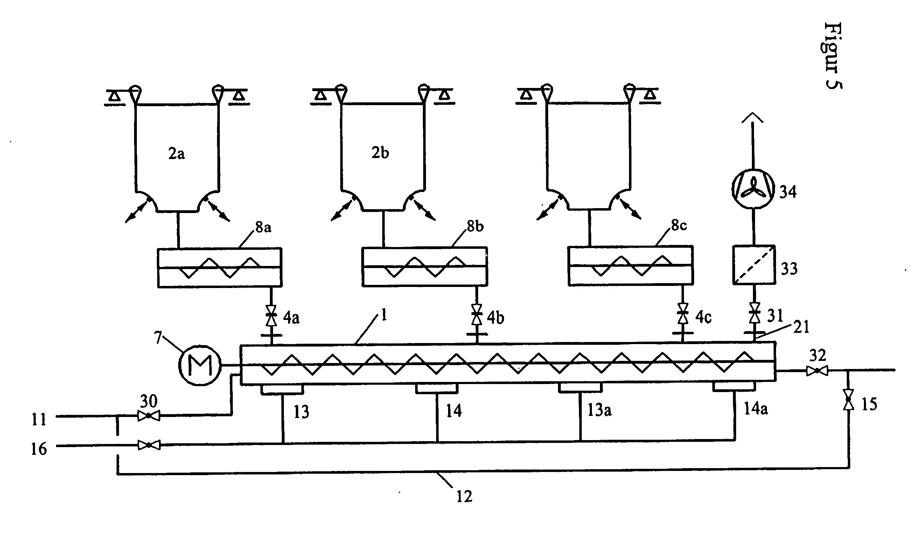

Die Figur 5 zeigt eine industrielle Anlage zur Dosierung von Komponenten über die erfindungsgemäße pneumatische Druckfördervorrichtung. Aus diesem Ausführungsbeispiel werden wesentliche Vorteile der Erfindung deutlich. Es ist dargestellt, dass für die Förderung verschiedener schwerfließende Schüttguter allein eine Vorrichtung notwendig ist, die über mehrere Aufgabebehälter (2a-c) und Zuteilvorrichtungen (8a-c) dosiert wird.

Der Längsförderer (1) kann auch hier aus mehreren seriell hintereinander geschalteten und in Transportrichtung miteinander verbundenen einzelnen Längsförderern (1) bestehen, so dass auch an der Bodenseite des so gebildeten, relativ langen Rohrgefäßes des Längsförderers (1) eine Vielzahl Durchlässe (13) für Druckgas (17) angeordnet sind.

Für die Dosierung und Förderung zu einer bestimmten, weiterverarbeitenden Anlage kann nun gleichzeitig aus verschiedenen Aufgabebehältern (2) (zum Beispiel Big Bags) der mechanische Förderer (9) programmgesteuert gefüllt werden. Hierzu werden die Absperrklappen (4a - c) geöffnet, und die Zuteilvorrichtungen (8a-c), in Fig. 5 Dosierschnecken als Zuteilvorrichtung (8), eingeschaltet. Nachdem die vorgesehene Menge an schwerfließendem Schüttgut, die über die Gewichtsmessung an dem Aufgabebehälter (2) erfasst wird, in den Längsförderer (1) eingebracht worden ist, werden die Absperrklappen (4a-c) und die Entlüftungsklappe (31) verschlossen. Die für eine Mischung oder einen Ansatz vorgesehene Menge an schwerfließendem Schüttgut kann anschließend in der vorher beschriebenen Weise zu einer weiterverarbeitenden Anlage gefördert werden.

Ein besonderer Vorteil des beschriebenen Verfahrens besteht darin, dass die Mischung oder der Ansatz im Längsförderer (1) vorgelegt werden kann, so dass die Zeitspanne zur Förderung der Mischung von schwerfließendem Schüttgut oder des Ansatzes sehr kurz ist. Durch diese Vorgehensweise werden durch die erfindungsgemäßen Vorrichtungen die nachgeschalteten Anlagen in ihrer Produktivität gesteigert.

Als bevorzuge Steuereinrichtungen (36) werden solche eingesetzt, in der die aufeinander abgestimmten Parameter der Drehzahl der Schnecke des mechanischen Förderers (9) sowie der Menge des Druckgases (17) hinterlegt sind.

Die Drehzahl der Schnecke des mechanischen Förderers (9) und die Druckgasmenge (17), kann in einer vorteilhaften Ausführung in Abhängigkeit vom Druck in dem Längsförderer (1) geregelt werden, um Verstopfungen in der Rohrleitung vorzubeugen.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Gleiches gilt für alle in der Beschreibung offenbarten Parameter und deren beliebige Kombinationen.

Anhand der nachfolgenden Beispiele wird die Erfindung näher erläutet, ohne das dadurch eine Einschränkung der Erfindung bewirkt werden soll.

### Zeichnungslegende

- 1.: Längsförderer
- 2.: Aufgabebehälter
- 4.: Absperrklappe
- 5.: Anschlussstutzen
- 6.: Pfeilrichtung
- 7.: Getriebemotor
- 8.: Zuteilvorrichtung
- 9.: Mechanischer Förderer
- 10.: Druckgasauslassleitung
- 11.: Druckgaseinlassleitung
- 12.: Bypassleitung
- 13.: Durchlässe
- 15.: Bypassventil
- 17.: Druckgas
- 18.: Peristaltische Walkeinrichtung
- 19.: Förderleitung
- 20.: Zielbehälter
- 21.: Entlüftungsstutzen
- 30.: Druckgasventil
- 31.: Entlüftungsklappe
- 32.: Auslassverschlussorgan
- 33.: Entlüftungsfilter
- 34.: Entlüftungsgebläse
- 35.: Empfangsfilter
- 36.: Steuereinrichtung
- 38.: Wiegeeinrichtung
- 40.: Absauggebläse

### Beispiel

Eine entsprechend der Anmeldung gestaltete Vorrichtung bestand aus einem Schneckenrohr als Längsförderer (1) mit 200 mm Durchmesser und einer Bandschnecke mit 2,5 m Länge als mechanischem Förderer (9) der wandgängig im Längsförderer (1) angebracht wurde.

Das zu fördernde schwerfließende Schüttgut war ein Eisenoxid mit einem D(v, 0,9)-Kennwert von 4,56 µm und einer Dichte von 0,45 t/m³. Der D(v, 0,9)-Kennwert wurde durch Laserbeugung (Gerät der Firma Malvern Instruments "Mastersizer-S") in einer wässrigen Suspension mit 0,1% Natriumphosphat als Dispergierhilfsmittel nach einer zweiminütigen Ultraschalldispergierung mit 200 W bestimmt.

Das zu fördernde schwerfließende Schüttgut, lief dem Längsförderer (1) bestehend aus einer Bandschnecke aus einem Aufgabebehälter (2) über eine Absperrklappe (4) als Zuteilvorrichtung (8) zu. Hinter dem Längsförderer (1) war eine Förderleitung (19) mit einer Nennweite von 65 mm und einer Länge von 45 m nachgeschaltet. An der Austragseite des Längsförderers (1) konnte die durch das Schüttgut verdrängte Luft als Druckgas (17) über einen Entlüftungsfilter (33) abgezogen werden.

Bei der Dosierung des Längsförderers (1) lief die Bandschnecke als mechanischer Förderer (9) mit 60 U/min für 12 s, getrieben durch einen Getriebemotor (7) vom Fabrikat Bauer. Der Längsförderer (1) wurde so mit 30 kg Eisenoxid dosiert. Anschließend wurde die Absperrklappe (4) und die Entlüftungsklappe (31) geschlossen. Als Druckgas (17) wurde Druckluft verwendet, welches anschließend mit einer Menge von 260 Nm³/h über die Druckgaseinlassleitung (11) - die im Endbereich des Längsförderers (1) angebracht war - und die Durchlässe (13) aufgegeben wurde.

Der Längsförderer (1) wurde anschließend unter gleichzeitiger Durchströmung mit der Druckluft und Einwirkung der Bandschnecke als mechanischem Förderer (9) in 20 s durch die Duckgasauslassleitung (10) - die am anderen Endbereich des Längsförderers (1) angebracht war - entleert, wobei das Produkt vollständig über die Förderleitung (19) in den Zielbehälter (20) mit Empfangsfilter (35) und Absauggebläse (40) transportiert wurde. Von 30 kg dosiertem Eisenoxid wurden 29.43 kg dabei gefördert, so das der Längsförderer (1) zu 98 % entleert wurde. Der Druck in der Schnecke betrug hierbei 2,3 bar.

Nach Abbau des Druckes, Anhalten der Bandschnecke und Schließen der Druckgasventile (30) konnte der Fördertakt in gleicher Weise mehrfach wiederholt werden.

## Patentansprüche

1. Vorrichtung zur pneumatischen Förderung einer vorbestimmten Menge von schwerfließendem Schüttgut, enthaltend eine Zuteilvorrichtung (8), einen Längsförderer (1) mit einem mechanischem Förderer (9), der im Wesentlichen überall wandgängig im Längsförderer (1) angebracht ist, einen Getriebemotor (7) für den mechanischen Förderer (9), Druckgaseinlass- (11) und Auslassleitungen (10) jeweils am anderen Endbereich des Längsförderers (1), eine Förderleitung (19) für das Schüttgut bzw. Druckgas (17) und eine Steuereinrichtung (36), **dadurch gekennzeichnet, dass** die Dosierung einer vorbestimmten Menge von schwerfließendem Schüttgut in den Längsförderer (1) und die vollständige Entleerung des Längsförderers (1) durch die Steuereinrichtung (36) gesteuert werden kann.

2. Vorrichtung nach Anspruch 1, **dadurch gekennzeichnet, dass** die Vorrichtung ein oder mehrere Durchlässe (13) für Druckgas (17) aufweist.

3. Vorrichtung nach einem oder mehreren der Ansprüche 1 und 2, **dadurch gekennzeichnet, dass** der mechanische Förderer (9) eine Bandschnecke, Paddelschnecke, Vollblattschnecke oder eine Doppelschnecke, bevorzugt eine Doppelpaddelschnecke oder Doppelbandschnecke, ist.

4. Vorrichtung nach einem oder mehrere der Ansprüche 1 bis 3, **dadurch gekennzeichnet, dass** ein Durchlass (13) für das Druckgas (17) an der Unterseite des Längsförderers (1) angebracht ist.

5. Vorrichtung nach einem oder mehreren der Ansprüche 1 bis 4, **dadurch gekennzeichnet, dass** eine Bypassleitung (12) vorzugsweise mit einem Ringspalt oder einem T-Stück hinter dem Auslass (10) auf die Förderleitung (19) angebracht ist.

6. Vorrichtung nach einem oder mehreren der Ansprüche 1 bis 5, **dadurch gekennzeichnet, dass** hinter der Druckgasauslassleitung (10) zur Förderleitung (19) hin ein Quetschventil oder ein Kugelhahn angebracht ist.

7. Vorrichtung nach einem oder mehreren der Ansprüche 1 bis 6, **dadurch gekennzeichnet, dass** als Zuteilvorrichtung (8) ein Schwingboden, eine Förderschnecke, ein positionsgesteuerter Schieber oder eine Zellenradschleuse eingesetzt wird.

8. Vorrichtung nach einem oder mehreren der Ansprüche 1 bis 7, **dadurch gekennzeichnet, dass** oberhalb der Zuteilvorrichtung (8) eine peristaltische Walkeinrichtung angeordnet ist.

9. Vorrichtung nach einem oder mehreren der Ansprüche 1 bis 8, **dadurch gekennzeichnet, dass** oberhalb der Zuteilvorrichtung (8) ein Aufgabebehälter (2) mit Fluidisiereinrichtung mit Luftdüsen angebracht ist.

10. Vorrichtung nach einem oder mehreren der Ansprüche 1 bis 9, **dadurch gekennzeichnet, dass** die Dosierung des Längsförderers (1) durch eine oder mehrere Wiegeeinrichtungen (38) registriert wird.

11. Vorrichtung nach einem oder mehreren der Ansprüche 1 bis 10, **dadurch gekennzeichnet, dass** mehrere Vorrichtungen parallel geschaltet sind.

12. Vorrichtung nach einem oder mehreren der Ansprüche 1 bis 11, **dadurch gekennzeichnet, dass** eine oder mehrere Vorrichtungen durch eine oder mehrere Zuteilvorrichtungen (8) dosiert werden.

13. Verfahren zur pneumatischen Förderung einer vorbestimmten Menge von schwerfließendem Schüttgut unter Verwendung der Vorrichtung nach einem oder mehreren der Ansprüche 1 bis 12, in dem
• Schüttgut über eine Zuteilvorrichtung (8) in einen Längsförderer (1) dosiert wird,
• das Schüttgut anschließend über eine Förderleitung (19) entleert wird,
wobei die Dosierung in den Längsförderer (1) mittels Zuteilvorrichtung (8) des Schüttguts im Längsförderer (1) gewährleistet wird und die Entleerung des Längsförderers (1) bei gleichzeitiger Einwirkung eines mechanischen Förderers (9), der im Wesentlichen überall wandgängig im Längsförderer (1) angebracht ist, und zufließendem Druckgas (17) im Gehäuse des Längsförderers (1) erfolgt, so dass der Längsförderer (1) beim Entleervorgang vollständig entleert wird, wobei die Steuereinrichtung (36) eingesetzt wird, um die Dosierung des Schüttgutes und die Entleerung des Längsförderers (1) zu steuern.

14. Verfahren nach Anspruch 13, **dadurch gekennzeichnet, dass** die Dosierung und Entleerung des Längsförderers (1) mehrfach wiederholt wird, wobei während der Dosierung des Längsförderers (1) Druckgas (17) durch eine zusätzliche Bypassleitung (12) in die Förderleitung (19) geleitet wird, um eine Strömung in der Förderleitung (19) von bis 50m/s aufrechtzuerhalten.

15. Verfahren nach einem oder mehreren der Ansprüche 13 und 14, **dadurch gekennzeichnet, dass** das Schüttgut durch die Förderleitung (19) bewegt wird, so dass die Dosierung von Schüttgut vollständig an den Empfangsort gelangt, ohne sich abzusetzen.

## Claims

1. Apparatus for the pneumatic conveyance of a predetermined amount of sluggishly flowing bulk material, containing an apportioning device (8), a longitudinal conveyor (1) with a mechanical conveyor (9), which is mounted, essentially wall-running overall, in the longitudinal conveyor (1), a gear motor (7) for the mechanical conveyor (9), compressed-gas inlet lines (11) and outlet lines (10), in each case at the other end region of the longitudinal conveyor (1), a conveying line (19) for the bulk material or compressed gas (17) and a control device (36), **characterized in that** the metering of a predetermined amount of sluggishly flowing bulk material into the longitudinal conveyor (1) and the complete emptying of the longitudinal conveyor (1) can be controlled by the control device (36).

2. Apparatus according to Claim 1, **characterized in that** the apparatus has one or more passages (13) for compressed gas (17).

3. Apparatus according to one or more of Claims 1 and 2, **characterized in that** the mechanical conveyor (9) is a ribbon worm, paddle worm, full-blade worm or double worm, preferably a double paddle worm or double ribbon worm.

4. Apparatus according to one or more of Claims 1 to 3, **characterized in that** a passage (13) for the compressed gas (17) is mounted on the underside of the longitudinal conveyor (1).

5. Apparatus according to one or more of Claims 1 to 4, **characterized in that** a bypass line (12), preferably with an annular gap or a T-piece, is mounted, downstream of the outlet (10), on the conveying line (19).

6. Apparatus according to one or more of Claims 1 to 5, **characterized in that** a pinch valve or a ball valve is mounted, downstream of the compressed-gas outlet line (10), towards the conveying line (19).

7. Apparatus according to one or more of Claims 1 to 6, **characterized in that** a vibrating floor, a conveying worm, a position-controlled slide or a cellular-wheel sluice is used as the apportioning device (8).

8. Apparatus according to one or more of Claims 1 to 7, **characterized in that** a peristaltic flexing device is arranged above the apportioning device (8).

9. Apparatus according to one or more of Claims 1 to 8, **characterized in that** a feed container (2) with a fluidizing device having air nozzles is mounted above the apportioning device (8).

10. Apparatus according to one or more of Claims 1 to 9, **characterized in that** the metering of the longitudinal conveyor (1) is recorded by means of one or more weighing devices (38).

11. Apparatus according to one or more of Claims 1 to 10, **characterized in that** a plurality of apparatuses are connected in parallel.

12. Apparatus according to one or more of Claims 1 to 11, **characterized in that** one or more apparatuses are metered by means of one or more apportioning devices (8).

13. Method for pneumatic conveyance of a predetermined amount of sluggishly flowing bulk material using the apparatus according to one or more of Claims 1 to 12, in which
• bulk material is metered via an apportioning device (8) into a longitudinal conveyor (1),
• the bulk material is subsequently emptied via a conveying line (19),
the metering into the longitudinal conveyor (1) being ensured by means of the device (8) for apportioning the bulk material in the longitudinal conveyor (1), and the emptying of the longitudinal conveyor (1) taking place under the simultaneous action of a mechanical conveyor (9), which is mounted, essentially wall-running overall, in the longitudinal conveyor (1), and inflowing compressed gas (17) in the housing of the longitudinal conveyor (1), so that the longitudinal conveyor (1) is emptied completely during the emptying operation, the control device (36) being used in order to control the metering of the bulk material and the emptying of the longitudinal conveyor (1).

14. Method according to Claim 13, **characterized in that** the metering and emptying of the longitudinal conveyor (1) are repeated several times, compressed gas (17) being conducted through an additional bypass line (12) into the conveying line (19) during the metering of the longitudinal conveyor (1), in order to maintain a flow in the conveying line (19) of 15 to 50 m/s.

15. Method according to one or more of Claims 13 and 14, **characterized in that** the bulk material is moved through the conveying line (19) in such a way that the metered bulk material arrives completely at the reception location, without settling.

## Revendications

1. Dispositif de transport pneumatique d'une quantité prédéterminée de produit en vrac s'écoulant difficilement, comprenant
un dispositif d'amenée (8),
un transporteur longitudinal (1) doté d'un transporteur mécanique (9) installé dans le transporteur longitudinal (1) essentiellement en contact partout avec les parois,
un groupe motoréducteur (7) pour le transporteur mécanique (9),
un conduit (11) d'entrée de gaz sous pression et un conduit (10) de sortie de gaz sous pression disposés aux extrémités respectives du transporteur longitudinal (1),
un conduit de transport (19) pour le produit en vrac et le gaz sous pression (17) et un dispositif de commande (36),
**caractérisé en ce que**
le dosage d'une quantité prédéterminée de produit en vrac s'écoulant difficilement dans le transporteur longitudinal (1) et la vidange complète du transporteur longitudinal (1) peuvent être commandés par le dispositif de commande (36).

2. Dispositif selon la revendication 1, **caractérisé en ce que** le dispositif présente un ou plusieurs passages (13) pour le gaz sous pression (17).

3. Dispositif selon l'une ou plusieurs des revendications 1 et 2, **caractérisé en ce que** le transporteur mécanique (9) est une vis à bande, une vis à aubes, une vis à volute continue ou une vis double et de préférence une vis à doubles aubes ou une vis à double bande.

4. Dispositif selon l'une ou plusieurs des revendications 1 à 3, **caractérisé en ce qu'**un passage (13) pour le gaz sous pression (17) est disposé sur le côté inférieur du transporteur longitudinal (1).

5. Dispositif selon l'une ou plusieurs des revendications 1 à 4, **caractérisé en ce qu'**un conduit de dérivation (12) de préférence doté d'un interstice annulaire ou d'une pièce en T est placé sur le dispositif de transport (19) en aval de la sortie (10).

6. Dispositif selon l'une ou plusieurs des revendications 1 à 5, **caractérisé en ce qu'**une soupape écrasable ou une vanne à bille sont installées en aval du conduit (10) de sortie du gaz en direction du conduit de transport (19).

7. Dispositif selon l'une ou plusieurs des revendications 1 à 6, **caractérisé en ce que** comme dispositif d'amenée (8), il utilise un fond vibrant, une vis de transport, un coulisseau à position contrôlée ou un sas à roue cellulaire.

8. Dispositif selon l'une ou plusieurs des revendications 1 à 7, **caractérisé en ce qu'**un dispositif péristaltique à galet est disposé au-dessus du dispositif d'amenée (8).

9. Dispositif selon l'une ou plusieurs des revendications 1 à 8, **caractérisé en ce qu'**un récipient d'amenée (2) doté d'un dispositif de fluidisation à tuyères d'air est disposé au-dessus du dispositif d'amenée (8).

10. Dispositif selon l'une ou plusieurs des revendications 1 à 9, **caractérisé en ce que** le dosage du transporteur longitudinal (1) est enregistré par un ou plusieurs dispositifs de pesée (38).

11. Dispositif selon l'une ou plusieurs des revendications là 10, **caractérisé en ce que** plusieurs dispositifs sont raccordés à parallèle.

12. Dispositif selon l'une ou plusieurs des revendications 1 à 11, **caractérisé en ce qu'**un ou plusieurs dispositifs sont dosés par un ou plusieurs dispositifs d'amenée (8).

13. Procédé de transport pneumatique d'une quantité prédéterminée de produit en vrac s'écoulant difficilement par recours au dispositif selon l'une ou plusieurs des revendications 1 à 12, et dans lequel
- le produit en vrac est dosé dans un transporteur longitudinal (1) à l'aide d'un dispositif d'amenée (8),
- le produit en vrac est ensuite vidé par un conduit de transport (19),
le dosage dans le transporteur longitudinal (1) étant assuré au moyen du dispositif (8) qui amène le produit en vrac dans le transporteur longitudinal (1) et la vidange du transporteur longitudinal (1) est réalisée par action simultanée d'un transporteur mécanique (9) installé dans le transporteur longitudinal (1) essentiellement partout en contact avec les parois et d'un gaz sous pression (17) amené dans le caisson du transporteur longitudinal (1) de telle sorte que le transporteur longitudinal (1) soit vidé complètement lors de l'opération de vidange, le dispositif de commande (36) étant utilisé pour commander le dosage du produit en vrac et la vidange du transporteur longitudinal (1).

14. Procédé selon la revendication 13, **caractérisé en ce que** le dosage et la vidange du transporteur longitudinal (1) sont répétés plusieurs fois, un gaz sous pression (17) étant amené dans le conduit de transport (19) par un conduit supplémentaire de dérivation (12) de manière à maintenir dans le conduit de transport (19) un écoulement de 15 à 50 m/s pendant le dosage du transporteur longitudinal (1).

15. Procédé selon l'une ou plusieurs des revendications 13 et 14, **caractérisé en ce que** le produit en vrac est déplacé dans le conduit de transport (19) de telle sorte que la totalité de la quantité de produit en vrac dosée aboutisse à l'emplacement de réception sans se déposer.
